# EUROPEAN PATENT APPLICATION

(11) **EP 3 852 171 A1**
(43) Date of publication of application: **21.07.2021**
(21) Application number: 20151598.8
(22) Date of filing: 14.01.2020
(51) Int. Cl.: H01M 4/134, H01M 4/1395, H01M 4/38, H01M 10/052

(54) **LITHIUM METAL ANODE COATING**

(71) Applicant: EMPA Eidgenössische Materialprüfungs- und Forschungsanstalt, CH-8600 Dübendorf (CH)
(72) Inventor: Fu, Chengyin, 8304 Wallisellen (CH); Battaglia, Corsin, 8315 Lindau (CH)
(74) Representative: Kasche & Partner

(57) **Abstract**

The invention pertains to a composition for coating a lithium metal anode of a lithium metal battery comprising a mixture of nanoparticles of at least one electrolyte-insoluble lithium salt and at least one lithium ion-coordinating polymer, as well as to corresponding uses and methods. The present invention further encompasses a lithium metal anode coated with the inventive composition as well as a battery comprising the coated lithium metal anode.

## Description

The invention pertains to a composition for coating a lithium metal anode of a lithium metal battery comprising a mixture of nanoparticles of at least one electrolyte-insoluble lithium salt and at least one lithium ion-coordinating polymer, as well as to corresponding uses and methods. The present invention further encompasses a lithium metal anode coated with the inventive composition as well as a battery comprising the coated lithium metal anode.

### Background

Lithium metal anodes are considered the "holy grail" for batteries due to their high specific capacity (3860 mAh g⁻¹) and the lowest electrochemical potential (-3.04 V vs SHE). However, dendrite formation on the lithium metal anode surface causes poor cycling stability, low coulombic efficiency, severe safety issues, and largely hinders the commercialization of batteries with lithium metal anodes. Due to non-uniform lithium plating and stripping, the solid electrolyte interphase (SEI) formed from the reactions between the lithium metal anode and the liquid electrolyte, will break and reform continuously, which facilitates the formation and growth of lithium dendrites and causes irreversible loss of the lithium and electrolyte. A means to achieve a stable solid electrolyte interphase during lithium metal plating and stripping is needed to realize the practical and safe implementation of lithium metal anodes.

Polymer coatings for use as stable interface layers on lithium metal anodes have been studied for more than two decades due to their excellent contact with lithium and their excellent processability (see, e.g. Liebenow et al. 1996, J. Appl. Electrochem. 26, 689.692; Lopez et al. 2018, J. Am. Chem. Soc. 140, 11735-11744; Tu et al. 2017, Joule 1, 394-406; Liu et al. 2017, J. Am. Chem. Soc. 139, 4815-4820), but the low ionic conductivity of the polymer coatings limits cell performance. Lithium salts such as lithium bis(trifluoromethanesulfonyl)imide (LiTFSI) are dissolved in polymers to increase the ionic conductivity (Xue et al. 2015, J. Mater. Chem. A 3, 19218-19253), but the composites still have low lithium ion conductivity at room temperature and, more importantly, cannot be used in combination with conventional liquid electrolytes due to the high solubility of the salts in the liquid electrolyte, which results in leaching of the salt out of the polymer matrices. Electrolyte-insoluble inorganic particles (Zha et al. 2018, Angew. Chem. 130, 1004-1008) and inorganic sheets (Zhao et al. 2018, Angew. Chem. 130, 1004-1008) have been incorporated inside polymer coatings to improve the ionic conductivity and mechanical properties. However, the composite coatings still suffer from low ionic conductivity, low electrochemical stability, and complicated synthesis methods.

US 2008/0057399 A1 discloses a protective composite for a metal anode comprising at least a first layer of Li salts and a separate second layer of phosphorous-based glass or lithium phosphorus oxynitride (LiPON), wherein only the first layer is in contact with the anode and the second layer is in contact with the first layer.

It is the objective of the present invention to provide an improved lithium anode coating, for example, a coating that is useful for extending the cycling performance of lithium metal batteries.

In a first aspect, the present invention is directed to a composition for coating a lithium metal anode of a lithium metal battery comprising or consisting of a mixture of:
(i) nanoparticles of at least one electrolyte-insoluble lithium salt, optionally selected from the group consisting of LiF, LiCl, LiBr, LiI, Li₂O, Li₂CO₃, LiOH, Li₃N and Li₂S; and
(ii) at least one lithium ion-coordinating polymer, optionally an ether- or nitrile-comprising polymer, optionally selected from the group consisting of polyethylene oxide (PEO), polyacrylonitrile (PAN), polyvinylidene fluoride (PVDF), polydimethylsiloxane (PDMS), polyglycolide (PGA), polylactide (PLA), polyvinyl alcohol (PVA), polyvinylamine (PVAm) and chitosan;
wherein the nanoparticles have a diameter of less than 1000 nm, optionally less than 300 nm.

The composition of the present invention serves as an electrochemically stable protective coating layer with very high lithium ion conductivity and high transference number for lithium metal anodes enabling uniform lithium deposition and greatly extending the cycling performance of lithium metal batteries.

Without wishing to be bound by theory, it is believed that the electrolyte-insolubility of the lithium compound leads to a stable interface between the salt and the lithium ion-coordinating polymer, which enables lithium ion transport. Compared to composites made of LiF/nitrile containing polymers (e.g. PIMs) and LiCl/organosilicon polymers, the ionic conductivity of the inventive composition is more than 10 times higher at room temperature. Without wishing to be bound by theory, it is believed that the enhancement of the ionic conductivity is due to the coordination capabilities of the polymer in combination with the low surface diffusion barrier of the lithium salt for lithium ions and the absorption of lithium ions at the lithium salt surface, which creates high concentrations of compensating lithium vacancies in the space charge region formed at the interface.

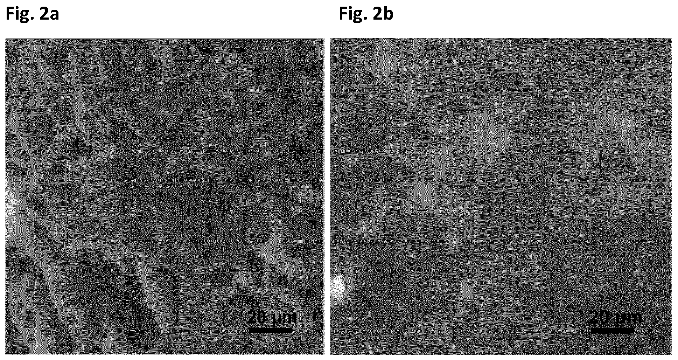

At room temperature, the inventive composition shows a very high ionic conductivity and a high transference number when used with a liquid electrolyte, which allows uniform lithium plating and stripping at high current density. As demonstrated in the Examples and Figures below, a cell comprising a lithium electrode coated with the inventive composition displays the best cycling performance due to its high ionic conductivity, high transference number, and the liquid electrolyte blocking ability in comparison to bare lithium electrodes and electrodes coated with a polymer only. Also, a lithium electrode coated with the inventive composition demonstrated a very flat surface, which indicates uniform lithium deposition (see, e.g., Fig. 2).

It was surprisingly found that the electrolyte-insoluble lithium salts for use in the present invention should be in the form of nanoparticles with a diameter of less than 1000 nm, optionally less than 300 nm. The nanoparticles of the electrolyte-insoluble lithium salts typically have a spherical shape and the diameter of the lithium salt nanoparticles can be determined by known methods, such as scanning electron microscopy (SEM).

The inventive composition is suitable for coating a lithium metal anode of any lithium metal battery which is optionally a lithium metal battery with a liquid electrolyte. Optionally, the inventive composition is suitable for coating a lithium metal anode of a lithium metal battery with a solid electrolyte.

In the context of all aspects and embodiments of the present invention, the term "electrolyte-insoluble lithium salt" means that the lithium salt does not dissolve in electrolytes, optionally liquid electrolytes, used in lithium metal batteries, such as, e.g., LiPF₆, LiTFSI, LiBF₄ or LiClO₄, in an organic solvent, such as ethylene carbonate, dimethyl carbonate, dimethoxyethane, tetraethylene glycol dimethyl ether, and diethyl carbonate or in an aqueous electrolyte. A lithium salt is considered not to dissolve in an electrolyte if less than 1 mg, 0.1 mg, 0.01 mg of lithium salt dissolve in 1 L of the electrolyte. Examples for electrolyte-insoluble lithium salts for use in the present invention are, e.g., LiF, LiCl, LiBr, LiI, Li₂O, Li₂CO₃, LiOH, Li₃N and Li₂S.

The term "lithium ion-coordinating polymer" as used herein for all aspects and embodiments refers to any polymer that is capable of coordinating lithium ions, e.g. by the interaction of electron pairs of the polymer, e.g. of ether- or nitrile- groups, with the lithium salt, by ionic interaction, by van der Waals forces, by pi-pi interactions or by hydrogen bonding. Examples for lithium ion-coordinating polymers as used herein are, e.g., ether- or nitrile-comprising polymers, and/or polymers selected from polyethylene oxide (PEO), polyacrylonitrile (PAN), polyvinylidene fluoride (PVDF), polydimethylsiloxane (PDMS), polyglycolide (PGA), polylactide (PLA), polyvinyl alcohol (PVA), polyvinylamine (PVAm) and chitosan. Also, other polyester polymers can be used in the composition of the present invention such as, e.g., polycaprolactone (PCL), polyhydroxyalkanoate (PHA), polyhydroxybutyrate (PHB), polyethylene adipate (PEA), polybutylene succinate (PBS), poly(3-hydroxybutyrate-co-3-hydroxyvalerate) (PHBV), polyethylene terephthalate (PET), polybutylene terephthalate (PBT), polytrimethylene terephthalate (PTT), polyethylene naphthalate (PEN) or vectran.

For example, the lithium salts for use in all aspects and embodiments of the present invention are surrounded, optionally fully surrounded and/or substantially uniformly, i.e. homogeneously, embedded in the polymer of the inventive composition.

In another embodiment, the composition of the present invention is one, wherein the volume ratio between the nanoparticles of the at least one lithium salt and the at least one polymer is selected from 10 vol.-% to 90 vol.-%, 20 vol.-% to 80 vol.-%, 25 vol.-% to 70 vol.-%, 30 vol.-% to 50 vol.-%, 50 to 70 vol.-% and 40 to 50 vol.-% lithium salt. For example, 40 vol.-% as used herein means that the ratio is 40 vol.-% lithium salt and 60 vol.-% polymer.

In a further embodiment, the nanoparticles for use in the present invention have a diameter of about 0.1 to 300 nm, 0.1 to 200 nm, or 0.1 to 100 nm, optionally a diameter of about 50 to 200 nm.

In another embodiment, the composition of the present invention is one, wherein the at least one lithium salt is LiF and the at least one polymer is PEO.

In a further aspect, the present invention is directed to a method for preparing a composition according to the present invention comprising the steps:
(i) providing nanoparticles of at least one electrolyte-insoluble lithium salt, optionally selected from the group consisting of LiF, LiCl, LiBr, LiI, Li₂O, Li₂CO₃, LiOH, Li₃N and Li₂S, wherein the nanoparticles have a diameter of less than 1000 nm, optionally less than 300 nm; and
(ii) mixing the nanoparticles with at least one lithium ion-coordinating polymer, optionally an ether- or nitrile-comprising polymer, optionally selected from the group consisting of polyethylene oxide (PEO), polyacrylonitrile (PAN), polyvinylidene fluoride (PVDF), polydimethylsiloxane (PDMS), polyglycolide (PGA), polylactide (PLA), polyvinyl alcohol (PVA), polyvinylamine (PVAm) and chitosan.

The nanoparticles of the least one electrolyte-insoluble lithium salt for use in all aspects and embodiments of the present invention can be prepared by known methods and optionally by ball-milling or high-energy ball milling.

Mixing the nanoparticles with the at least one lithium ion-coordinating polymer in all methods of the present invention can be achieved by adding the nanoparticles to a solution of the polymer followed, e.g. by stirring. Exemplary solvents for dissolving the polymer and mixing the nanoparticles and the polymer include, e.g., solvents which readily dissolve the polymer, such as, e.g., THE, NMP, DMF, methanol, ethanol, acetonitrile, toluene or chloroform. Optionally, THE can be used as a solvent for mixing PEO and LiF and, e.g., NMP can be used for mixing PAN or PVDF and LiF.

Optionally, the mixing step of all methods described herein can be performed by stirring the mixture at temperatures at or above room temperature, e.g. at about 40 to 60°C, optionally at about 55°C, optionally for a period of 1 h to weeks, optionally from 12 to 72 h, optionally from 24 to 48 h.

The polymer solution in all aspects and embodiments disclosed herein can, e.g., feature a concentration of 0.1 to 100 mg/mL, 1 to 50 mg/mL, 10 to 20 mg/mL. Generally, diluted solutions, i.e. polymer concentrations of 10 to 20 mg/L can yield a substantially uniform, i.e. homogeneous embedding of the lithium salt(s) in the polymer.

In another aspect, the present invention is directed to a use of a composition as described herein for coating a lithium metal anode, optionally directly coating a lithium metal anode, of a lithium metal battery.

In the context of the present invention, the term "directly coating" means that the coating is applied to the lithium metal anode so that the coating is in direct contact with the anode. In other words, "directly coating", as used herein, excludes the (continued) presence of any other material(s), in particular any other, e.g., prior art coatings, between the lithium metal anode and the coating of the present invention.

In another embodiment, the use according to the present invention is one, wherein the coated composition is a monolayer and/or has a thickness selected from the group consisting of 0.1 to 50, 0.5-50 µm, 0.5-30 µm, and 1-10 µm.

The term "monolayer", as used herein for all aspects and embodiments, means that the coated composition forms a homogeneous layer on the lithium metal anode and is not interrupted by layers of other material(s).

In another aspect, the present invention is directed to a method of coating a lithium metal anode of a lithium metal battery comprising the steps:
(i) providing at least one lithium metal anode;
(ii) providing nanoparticles of at least one electrolyte-insoluble lithium salt, optionally selected from the group consisting of LiF, LiCl, LiBr, LiI, Li₂O, Li₂CO₃, LiOH, Li₃N and Li₂S, wherein the nanoparticles have a diameter of less than 1000 nm, optionally less than 300 nm;
(iii) mixing the nanoparticles of step (ii) with a solution of at least one lithium ion-coordinating polymer, optionally an ether- or nitrile-comprising polymer, optionally selected from the group consisting of polyethylene oxide (PEO), polyacrylonitrile (PAN), polyvinylidene fluoride (PVDF), polydimethylsiloxane (PDMS), polyglycolide (PGA), polylactide (PLA), polyvinyl alcohol (PVA), polyvinylamine (PVAm) and chitosan, optionally by stirring;
(iv) coating, optionally directly coating, the at least one lithium metal anode of step (i) with the mixture of step (iii), optionally by drop-casting, spin-coating, blade-coating, or slot-die coating; and
(v) drying the coated lithium metal anode of step (iv), optionally in vacuum.

Drying of the coated composition in all aspects and embodiments of the present invention can be performed at room temperature or at temperatures between 20 and 100°C, 20 and 70°C, 20 and 50°C or at about 50 or 55°C. The temperature can be chosen according to the characteristics of the polymer(s) and/or solvent(s) used.

In another embodiment, the method described herein is one, wherein the volume ratio between the nanoparticles of the at least one lithium salt and the at least one polymer in step (iii) is selected from 10 vol.-% to 90 vol.-%, 25 vol.-% to 80 vol.-%, 30 vol.-% to 70 vol.-% and 50 vol.-% to 70 vol.-% lithium salt.

In a further embodiment, the method described herein is one, wherein the anode is coated in step (iv) with a monolayer and/or wherein the thickness of the coating is selected from 0.1 to 50, 0.5-50 µm, 0.5-30 µm, and 1-10 µm.

In another embodiment, the method described herein is one, wherein the nanoparticles have a diameter of about 0.1 to 300 nm, 0.1 to 200 nm, or 0.1 to 300 nm, optionally a diameter of 50 to 200 nm.

In another aspect, the present invention is directed to a lithium metal anode coated, optionally directly coated, with the composition described herein and/or prepared according to the method described herein.

In a further aspect, the present invention is directed to a battery comprising the lithium metal anode described herein.

The following Figures and Examples serve to illustrate the invention and are not intended to limit the scope of the invention as described in the appended claims.

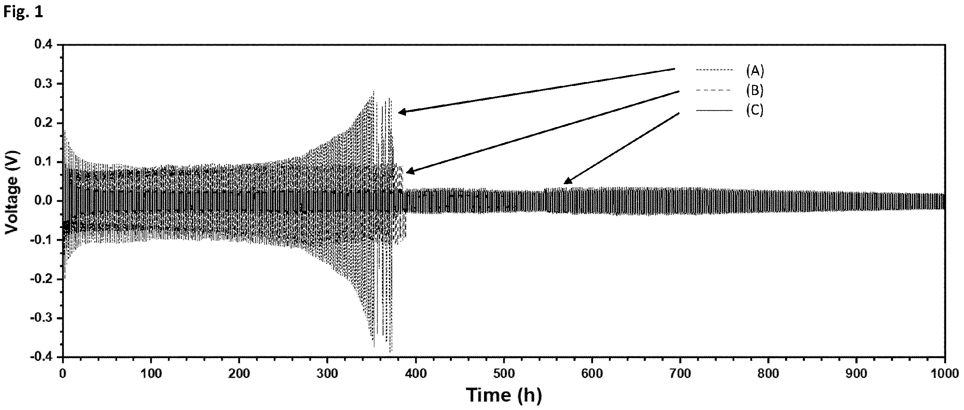

**Fig. 1** shows symmetric lithium cells cycled at 1 mA cm⁻² with 1 h lithium plating and stripping at room temperature. ((A) - dotted line) without coating, ((B) - dashed line) with PEO coating, ((C) - solid line) with a coating comprising LiF and PEO according to the present invention.
**Fig. 2** shows top-down SEM images of lithium electrodes from the symmetric cells with bare lithium (Fig. 2a) and the lithium electrodes coated with a coating comprising LiF and PEO according to the present invention (Fig. 2b) after 50 cycles.

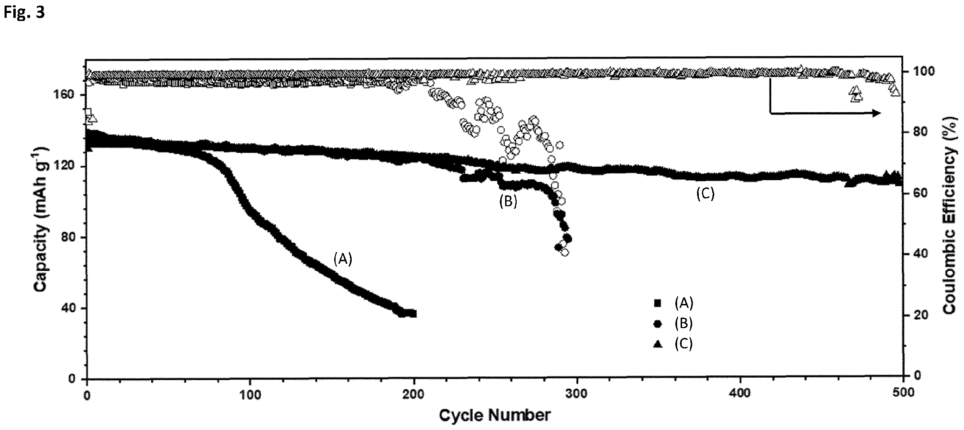

**Fig. 3** shows full lithium battery cells with 1 mAh cm⁻² NMC622 cathode cycled at 1 mA cm⁻² at room temperature. ((A) - square) without coating, ((B) - circle) with PEO coating and ((C) - triangle) with a coating composition comprising LiF and PEO according to the present invention. The solid squares/circles/triangles refer to the capacity (left y-axis) and the hollow squares/ circles/ triangles refer to the coulombic efficiency (right y-axis).

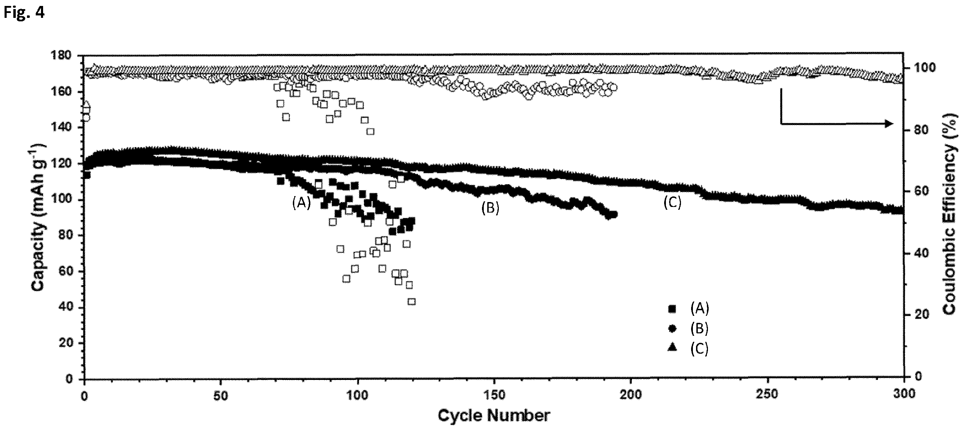

**Fig. 4** shows full lithium battery cells with 1 mAh cm⁻² NMC622 cathode cycled at 3 mA cm⁻² at room temperature. ((A) - square) without coating, ((B) - circle) with PEO coating and ((C) - triangle) with a coating composition comprising LiF and PEO according to the present invention. The solid squares/circles/triangles refer to the capacity (left y-axis) and the hollow squares/ circles/ triangles refer to the coulombic efficiency (right y-axis).

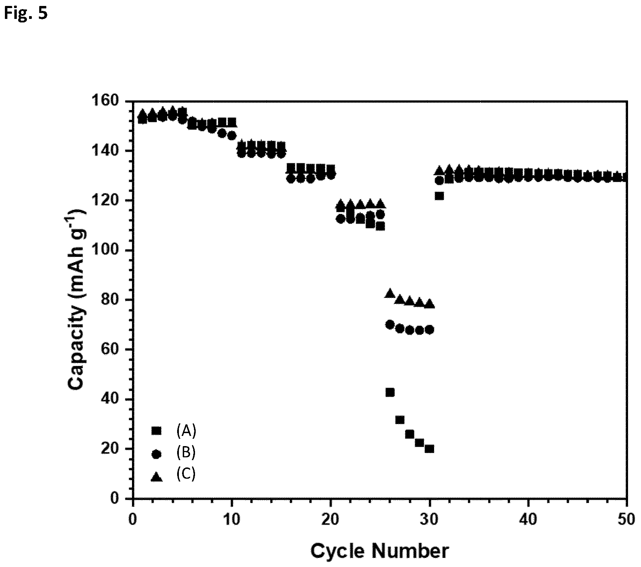

**Fig. 5** shows full lithium battery cells with 1 mAh cm⁻² NMC622 cathode cycled at various current densities ranging from 0.1 to 5 mA cm⁻² at room temperature. ((A) - square) without coating, ((B) - circle) with PEO coating and ((C) - triangle) with a coating composition comprising LiF and PEO according to the present invention.

### Example 1: Preparation of a composition comprising LiF and PEO

All chemicals were used after water removal. PEO solution was prepared by dissolving 100 mg PEO (M.W. = 1,000,000) in 10 ml tetrahydrofuran (THF) at 55 °C. LiF nanoparticles were obtained by high-energy ball-milling (SPEX SamplePrep 8000M mixer/mill, SPEX® SamplePrep, USA) for 10 h to obtain LiF particles (< 5 µm). 150 mg LiF nanoparticles were added into the PEO solution, which yielded a LiF:PEO weight ratio of 3:2, corresponding to a volume ratio of 40.8%, and the mixture was vigorously stirred for 48 h at 55°C in an argon-filled glovebox. To prepare the composite coating on an Li electrode, 130 µl of the Li/PEO mixture was drop casted onto Li discs with diameter of 16 mm, and the Li discs were dried at room temperature in the glovebox overnight and in vacuum for 2 h. Then, the coated Li electrodes were punched into 14 mm diameters discs to further improve a uniform coating on the electrode edges.

To prepare a PEO coating on an Li electrode, 130 µl of the PEO solution described above without any lithium salt was drop casted onto Li discs with diameter of 16 mm, and the Li discs were dried at room temperature in the glovebox overnight and in vacuum for 2 h. Then, the coated Li electrodes were punched into 14 mm diameters discs to further improve uniform coating on the electrode edges.

### Example 2: Electrochemical characterization

Electrochemical studies were performed using CR2032 coin cells (Pred Materials International, USA). Celgard 2325 (Celgard LLC, USA) was used as the separator in all the cells. Symmetric lithium cells were assembled with two coated lithium-metal electrodes with a thickness of 250 µm. Full lithium cells were assembled with the same 250 µm thick lithium and 622 lithium nickel manganese cobalt oxide cathode with a real capacity of 1 mAh cm⁻² from Custom Cells (CUSTOMCELLS®, Germany). The liquid electrolyte used in each symmetric and full cell was 30 µl 1.0 M LiPF₆ in EC (ethylene carbonate):DMC (dimethyl carbonate) (1:1) with 10 wt% fluoroethylene carbonate (FEC).

At room temperature, the composition showed a very high ionic conductivity of 0.97 × 10-3 S cm⁻¹ and a high transference number of 0.77 when used with liquid electrolyte, which allows uniform lithium plating and stripping at high current density. The symmetric lithium cells were cycled at 1 mA cm⁻² with 1 h lithium plating and stripping at room temperature as shown in Fig. 1. The cell with the lithium electrode coated with the inventive composition showed the best cycling performance due to its high ionic conductivity, high transference number, and the liquid electrolyte blocking ability. The cell with baseline bare lithium electrodes lasted for 250 h before it shows a large and irreversible voltage increase. With a PEO coating on lithium electrodes, the cycle life was extended to 400 h. With the coating composition according to the present invention, a large improvement of the cycle stability was observed. The cell lasted for more than 1000 h without a significant change in over potential. Figure 2 shows top-down SEM images of lithium electrodes from the symmetric cells with bare lithium and lithium electrodes coated with a composition according to the present invention after 50 cycles. The cycled lithium electrode from the cell with bare lithium showed dense growth of porous lithium. The lithium electrode coated with the composition according to the present invention showed a very flat surface, which indicates uniform lithium deposition. The lithium electrode coated with the composition according to the present invention was further tested in full cells with 1 mAh cm⁻² NMC622 cathode. Figure 3 shows the galvanostatic cycling of the full cells at 1 mA cm-2 at room temperature. The cell with the lithium anode coated with the composition according to the present invention showed an initial capacity of 135 mAh g⁻¹, and it exhibited excellent cycle stability. The cell had a Coulombic efficiency close to 100% throughout the cycles, and it maintained 83.3% of its initial capacity at 500th cycle, which is only 0.03% capacity loss per cycle. The cells were also cycled at a high current density of 3 mA cm⁻² at room temperature as shown in Figure 4. The cell with the lithium anode coated with the composition according to the present invention showed an excellent stability for more than 300 cycles.

## Claims

1. A composition for coating a lithium metal anode of a lithium metal battery comprising or consisting of a mixture of:
(i) nanoparticles of at least one electrolyte-insoluble lithium salt, optionally selected from the group consisting of LiF, LiCl, LiBr, LiI, Li₂O, Li₂CO₃, LiOH, Li₃N and Li₂S; and
(ii) at least one lithium ion-coordinating polymer, optionally an ether- or nitrile-comprising polymer, optionally selected from the group consisting of polyethylene oxide (PEO), polyacrylonitrile (PAN), polyvinylidene fluoride (PVDF), polydimethylsiloxane (PDMS), polyglycolide (PGA), polylactide (PLA), polyvinyl alcohol (PVA), polyvinylamine (PVAm) and chitosan;
wherein the nanoparticles have a diameter of less than 1000 nm, optionally less than 300 nm.

2. The composition according to claim 1, wherein the volume ratio between the nanoparticles of the at least one lithium salt and the at least one polymer is selected from 10 vol.-% to 90 vol.-%, 20 vol.-% to 80 vol.-%, 25 vol.-% to 70 vol.-% and 50 vol.-% to 70 vol.-% lithium salt.

3. The composition according to claim 1 or 2, wherein the nanoparticles have a diameter of about 0.1 to 300 nm, 0.1 to 200 nm, or 0.1 to 100 nm, optionally a diameter of 50 to 200 nm.

4. The composition according to any of claims 1 to 3, wherein the at least one lithium salt is LiF and the at least one polymer is PEO.

5. A method for preparing a composition according to any of claims 1 to 4 comprising the steps:
(i) providing nanoparticles of at least one electrolyte-insoluble lithium salt, optionally selected from the group consisting of LiF, LiCl, LiBr, LiI, Li₂O, Li₂CO₃, LiOH, Li₃N and Li₂S, wherein the nanoparticles have a diameter of less than 1000 nm, optionally less than 300 nm, optionally prepared by ball-milling, optionally prepared by high-energy ball milling; and
(ii) mixing the nanoparticles with at least one lithium ion-coordinating polymer, optionally an ether- or nitrile-comprising polymer, optionally selected from the group consisting of polyethylene oxide (PEO), polyacrylonitrile (PAN), polyvinylidene fluoride (PVDF), polydimethylsiloxane (PDMS), polyglycolide (PGA), polylactide (PLA), polyvinyl alcohol (PVA), polyvinylamine (PVAm) and chitosan.

6. A use of a composition according to any of claims 1 to 4 for coating a lithium metal anode, optionally directly coating a lithium metal anode, of a lithium metal battery.

7. The use according to claim 6, wherein the coated composition is a monolayer and/or has a thickness selected from the group consisting of 0.1 to 50, 0.5-50 µm, 0.5-30 µm, and 1-10 µm.

8. A method of coating a lithium metal anode of a lithium metal battery comprising the steps:
(i) providing at least one lithium metal anode;
(ii) providing nanoparticles of at least one electrolyte-insoluble lithium salt, optionally selected from the group consisting of LiF, LiCl, LiBr, LiI, Li₂O, Li₂CO₃, LiOH, Li₃N and Li₂S, wherein the nanoparticles have a diameter of less than 1000 nm, optionally less than 300 nm, optionally prepared by ball-milling, optionally prepared by high-energy ball milling;
(iii) mixing the nanoparticles of step (ii) with a solution of at least one lithium ion-coordinating polymer, optionally an ether- or nitrile-comprising polymer, optionally selected from the group consisting of polyethylene oxide (PEO), polyacrylonitrile (PAN), polyvinylidene fluoride (PVDF), polydimethylsiloxane (PDMS), polyglycolide (PGA), polylactide (PLA), polyvinyl alcohol (PVA), polyvinylamine (PVAm) and chitosan, optionally by stirring;
(iv) coating, optionally directly coating, the at least one lithium metal anode of step (i) with the mixture of step (iii), optionally by drop-casting, spin-coating, blade-coating, or slot-die coating; and
(v) drying the coated lithium metal anode of step (iv), optionally in vacuum.

9. The method according to claim 8, wherein the volume ratio between the nanoparticles of the at least one lithium salt and the at least one polymer in step (iii) is selected from 10 vol.-% to 90 vol.-%, 20 vol.-% to 80 vol.-%, 25 vol.-% to 70 vol.-% and 50 vol.-% to 70 vol.-% lithium salt.

10. The method according to claim 8 or 9, wherein the anode is coated in step (iv) with a monolayer and/or wherein the thickness of the coating is selected from 0.1 to 50, 0.5-50 µm, 0.5-30 µm, and 1-10 µm.

11. The method according to any of claims 8 to 10, wherein the nanoparticles have a diameter of about 0.1 to 300 nm, 0.1 to 200 nm, or 0.1 to 300 nm, optionally a diameter of 50 to 200 nm.

12. A lithium metal anode coated, optionally directly coated, with the composition according to any of claims 1 to 4 or prepared according to the method of any of claims 8 to 11.

13. A battery comprising the lithium metal anode according to claim 12.
